# EUROPEAN PATENT SPECIFICATION

(11) **EP 1 926 297 B1**
(45) Date of publication and mention of the grant of the patent: **01.04.2015**
(21) Application number: 08075188.6
(22) Date of filing: 19.10.2004
(51) Int. Cl.: H04M 1/725

(54) **Notifying a user**
Benachrichtigung eines Benutzers
Notifier à un utilisateur

(43) Date of publication of application: 28.05.2008
(62) Divisional of application: 04024841.1
(73) Proprietor: Nokia Technologies OY, 02610 Espoo (FI)
(72) Inventor: Chipchase, Jan, Tokyo 154-0015 (JP); Grignani, Raphael, Woodhills, CA 91364 (US); Aaltonen, Antti, 33680 Tampere (FI)
(74) Representative: Style, Kelda Camilla Karen

(56) References cited:
- EP-A- 0 954 150
- EP-A- 1 503 566
- WO-A-01/91424
- US-A1- 2003 098 821
- US-B1- 6 188 886
- US-B1- 6 459 440

## Description

The present invention relates to a portable device that is capable of notifying a user of events. Embodiments of the invention can thereby unobtrusively provide the user with a peripheral awareness.

Portable devices are now capable of performing multiple functions. For example, mobile phones not only provide wireless telephone services but also typically provide games, calendars or diary systems and text or multimedia messaging services. The variety of services offered by portable devices is constantly increasing, with some devices offering music and video playing applications. However, with this increased functionality comes an increased amount and variety of information that may need to be communicated to the user at any one time. For example, while a user is playing a game on his or her mobile phone there may be an incoming call or text message. This information needs to be communicated to the user in as effective a way as possible.

When some event or trigger condition occurs, there are generally different types of information that need to be communicated to a user of a portable device. Firstly, the occurrence of the event itself will typically prompt an immediate alert signal to the user, e.g. an audible signal to indicate that a text message has been received or the time for attending an appointment is imminent. However, the user usually requires additional information about what has triggered such an alert in order that he can take appropriate action. For example, the user would need to know firstly that the alert was issued because of an entry in his calendar and secondly that it relates to a meeting with his boss in five minutes.

In addition to, or instead of, the alert, a small icon may be presented to the user when the portable device is in the passive state. For example, a mobile phone may present a small icon in the shape of an envelope to indicate that a text message has been received and has not yet been read. However, this method does not provide the user with any further information other than that a particular event has occurred. It does not give him any information about the nature of the event.

One option is to display the information on a screen of the device. However, portable devices typically have a small screen size. Therefore, only information related to a single application can normally be displayed at any one time. This means that the user has to actively interact with several applications in order to pursue information relating to a specific event. This is tedious and time consuming. In particular, when a user's attention is focussed on a specific portable application, e.g. gaming, the user is unlikely to interrupt the gaming application to chase up the information about an event, preferring instead to concentrate on the application that he or she is currently engaged in. Therefore, time sensitive information such as diary reminders may be ignored by the user and not read until later, when the information has no relevance.

Some computer applications provide for an icon relating to a particular status of the computer to be permanently displayed on screen. When an alert occurs e.g. in response to a virus attacking the computer or an incoming email arriving, a miniature window appears to provide brief information about the event. The user can then click on the miniature window to open another window containing further information about the alert or email. However, such miniature windows are not sensitive to the information being displayed on the screen at the time of the alert and are always displayed in the same place unless moved by the user. Therefore, the alert information can obscure parts of the screen that the user is looking at. However, this is not normally a significant problem for devices that have relatively large displays, such as personal computers. One example of such a miniature window is that provided by the "desktop alert" in Microsoft's Outlook 2003 program.

A further problem is that a means may have to be provided to allow a user to act on an alert of an event that is independent of the function he is currently using. This poses further problems in devices such as small mobile phones. Where a device has a small screen, information displayed on the screen has to be very tightly arranged so that it can all be displayed on the screen at the same time. This means that for a user to be able to click on a small sector of the screen, such as a window, a cursor must be capable of being moved with great precision, by the user. Most portable devices are not equipped with the necessary hardware to enable a user to move a cursor around a small screen easily and with the necessary precision. Therefore, it is desirable to allow the alert to be selected by a key of a keypad of the device, but due to their small size such devices have few keys and many of those may be used in the context of the current function. Many current mobile phones have keys that in many operational contexts are dedicated for answering or rejecting an incoming call should one occur, but these are not readily applicable to displayed alerts of other types of communication since that would make the user interface seem less logical and intuitively usable.

WO 01/91424 discloses a mobile telephone having a game device function. When an incoming call is received, this may be indicated to the user via the display and the state of the game saved so that it can be resumed on termination of the call.

There is therefore a need to provide peripheral awareness to a user of a portable device about objects or events of interest while the user is actively engaged in an application of the portable device.

According to a first embodiment of the present invention, there is provided a portable device for notifying a user of an event, the device being capable of providing a user-operable function to the user and having a screen for displaying function information in accordance with the user-operable function being operated by the user and a keypad comprising a plurality of keys for receiving input from the user, wherein the device is arranged to determine that an event independent of the user-operable function has occurred, generate event information about the event, display at least some of the event information on the screen; in response to a single one of the keys being operated whilst at least some of the event information is displayed, activate a second function corresponding to the event; the portable device characterised in that an action taken by the portable device when said second function is activated is defined by the type of said event and said user-operable function; and the event is one of a plurality of different types of event and the device is capable of providing a plurality of different second functions corresponding to the types of event and the device is arranged to activate one of those functions as the second function in dependence on the type of the event.

Preferably, the types of event may include different forms of incoming communication to the device and the functions may include a wireless communication function.

The device is preferably arranged to, if the incoming communication is an incoming text or multimedia message, activate a text or multimedia communication function as the second function. The device is preferably arranged to, if the incoming communication is telephone call, activate a telephone call function as the second function. Operating the single one of the keys whilst at least some of the event information is displayed may cause the incoming call to be accepted or rejected.

The event information that is generated may include information, received in an incoming message. Information received in an incoming message may then be displayed on the screen of the portable device.

The types of event may include one or more types of occurrence within the portable device. For example, the device may provide a diary function to the user and one of the said types of occurrence may be the triggering of a diary reminder or the device may comprise a battery and one of the said types of occurrence may be the battery level falling below a predetermined threshold.

Preferably the single one of the keys is a dedicated key, such that the second function is only activated in response to the dedicated key being operated whilst at least some of the event information is displayed. The device may have single dedicated key that activates the second function irrespective of the type of event that occurred or a different dedicated key to activate the second function for each type of event.

The device is arranged to pause the function being operated by the user when the second function is activated. The device may be arranged to provide the user with the function being operated by the user and the second function simultaneously.

Activation of the second function may cause additional information about the event to be displayed.

According to a further aspect of the first embodiment a method is provided for notifying a user of an event, the method being carried out by a device capable of providing a user-operable function to the user and having a screen for displaying function information in accordance with the user operable function being operated by the user and a keypad comprising a plurality of keys for receiving input from the user, the method comprising : determining that an event independent of the first function has occurred; generating event information about the event; displaying at least some of the event information on the screen; in response to a single one of the keys being operated whilst at least some of the event information is displayed, activating a second function corresponding to the event; the method characterised by defining an action taken by the portable device when said second function is activated by the type of said event and said user operable function; wherein the event may be one of a plurality of different types of event and the device is capable of providing a plurality of different second functions corresponding to the types of event and the device is arranged to activate one of those functions as the second function in dependence on the type of the event.

According to an example the device is arranged to display at least some of the event information on the screen in a location of the screen that is dependent on the function information currently being displayed.

According to an example the portable device is capable of providing a plurality of user- operable functions to a user and in response to the event information being selected the portable device is arranged to operate in another of the functions than the function being operated by the user.

In response to the event information being selected the portable device may be arranged to display additional information about the event.

The event may be an incoming phone call or an incoming text or multimedia message. The event information generated by the portable device may include the content of the message.

The portable device may monitor a value indicative of the status of a condition on which the operation of the function being operated by the user is dependent and the event may occur when the value reaches a predetermined threshold. The condition may be the charge level of a battery or the strength of a signal received by the portable device.

The portable device may capable of displaying the event information and the function information so as to overlap in the same location of the screen such that the overlapping event information and function information is visible to the user. The portable device may be capable of steadily altering a parameter of a format in which the event information is displayed.

The portable device may change the parameter of a format in which the event information is stored in response to a predetermined input being entered into the user input device.

In accordance with an example the portable device displays the event information for a predetermined length of time.

According to an example the device is arranged display at least some of the event information in a partial area of the screen by scrolling the content of the event information progressively through the partial area.

According to an example the event information is displayed using a scrolling notification bar.

According to an example the device is arranged to generate event information about the event in dependence on the nature of the event and the state of the function being operated and display at least some of the event information on the screen.

The function being operated may be a gaming application.

For a better understanding of the present invention, reference is made to the accompanying drawings in which:
Figure 1 shows the screen of a portable device as an incoming call is received;
Figure 2 shows the screen of a portable device as a text message is received and the battery runs low;
Figure 3 shows the screen of a portable device as the battery runs low;
Figure 4 shows the screen of a portable device as a diary reminder is triggered;
Figure 5 shows the screen of a portable device as an incoming call is received;
Figure 6 shows the screen of a portable device functioning as an audio player as a text message is received; and
Figure 7 shows the screen of a portable device functioning as a video player as a text message is received.

The present invention provides a method for notifying the user of a portable device of an event or object that may be of interest to a user. In one embodiment, the user is notified by displaying an alert window e.g. by displaying a scrolling notification bar (SNB) across a particular area of the screen. Preferably, the area of the screen is chosen in chosen in such a way as to minimise the user's distraction from the current application. The window may contain text, graphics or both.

The portable device may be a mobile phone, a PDA, an MP3 player or any other portable device. The invention is most advantageously realised on a device that has a relatively small display, e.g. a display smaller than 8cm in each direction, or more preferably smaller than 6cm in each direction.

As portable devices typically have small screens, they are only able to display content relating to a single application or function at any one time. For example, with existing portable devices, if the device is displaying information relating to a gaming application, the user will not be able to then read an incoming text message because the screen is too small to display information relating to both the gaming application and the texting application at the same time. In contrast, a portable device according to the present invention is able to display alert information relating to a different application from the current application at the same time as content information relating to the current information is being displayed on a small screen.

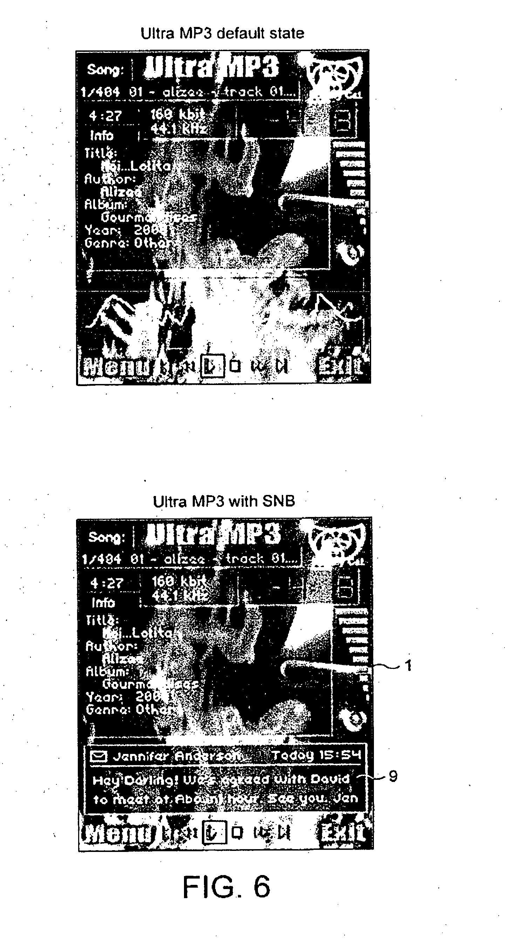

The area of the screen used to display the alert information may be defined by the application designer. The area of the screen may be chosen to be the same every time for a particular application. This allows the designer to arrange for the alert information to appear in an appropriate part of the screen so that it does not obscure other elements of the display. For example, the designer may define that alert information should appear either above or below other elements. The alert may also be displayed using transparency effects so that other elements of the display can still be seen "through" the alert information. For example, figure 6 illustrates a portable device operating as an MP3 player. The application designer knows that the information related to the MP3 application is concentrated at the bottom of the screen and in the upper half of the screen. Therefore, a suitable place to display the alert window (9) is between these two areas of the screen so that the alert information does not obscure information relating to the MP3 application.

The user of the portable device may be able to adjust the position of the alert window to a preferred location of the screen.

The alert window preferably displays alert information using a small font size, so that the amount of alert information displayed at any one time is maximised as far as possible. The portable device may adjust the font size in dependence on the amount of alert information to be displayed.

The alert window may be a pop-up window such as an SNB. If the alert window is an SNB, the alert information may scroll across the area of the screen defined for the window. This is advantageous because that more information can be communicated to the user by scrolling the information across a small window of the screen than can be displayed in a static fashion in that window. This is efficient at making the best use of the limited space available for displaying the information.

Scrolling the information across the window is also beneficial because it allows the user to easily follow the information. If there is too much information to be displayed in a single small window, the information could be divided into a number of sections with each section being displayed in a static fashion in turn. However, it is easier for the user to read and understand the information if it is scrolled across the window, particularly if the user's attention is actually focussed on a different application (e.g. a game). This is because if the information is displayed in sections, the user has to remember previously displayed sections of the information to be able to understand subsequently displayed sections.

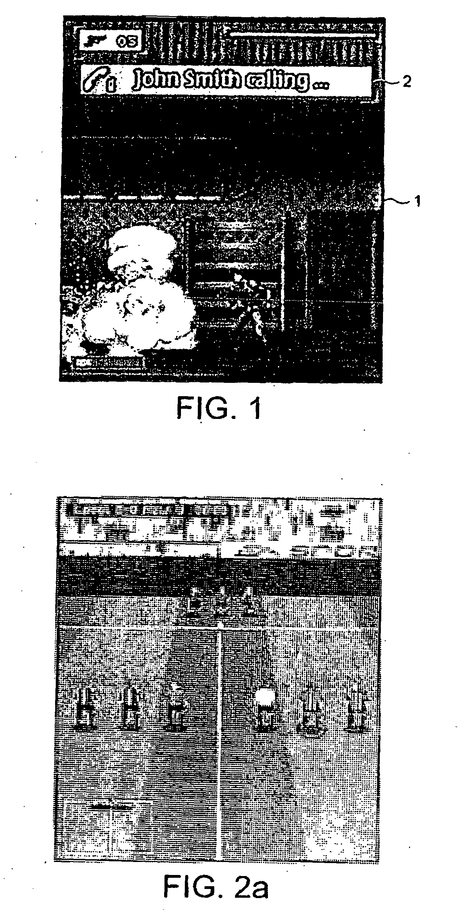

Figure 1 illustrates a typical screen (1) of a portable device such as a mobile phone as a game is being played. At the top of the screen an SNB (2) is illustrated. In this example, the SNB has been triggered by the receipt of an incoming call. The SNB is positioned in an appropriate part of the screen so that it does not interfere with the game play. In figure 1, the SNB has been positioned at the top of the screen, above the characters involved in the "action" of the game. Thus, the SNB informs the user of the incoming call in an unobtrusive manner without interrupting the user's gaming experience. The SNB also contains information about the reason for the alert. In this case, the SNB displays the type of alert, i.e. an incoming call, together with the identity of the caller. Thus, the information displayed by the SNB is independent of the current application. This enables the user to choose whether to answer the call or continue with the game. For example, in figure 1 the user might be expecting an urgent call from John Smith and so when the SNB appears he opts to answer the call. If the user decides to answer the call, the game may be automatically be paused, so that the user can restart the game where he left it when the call is finished.

If the user does not select the alert window (e.g. via the keyboard, touch sensitive screen or other user input device of the portable device), then the alert window disappears off the screen.

If the alert window is selected, the portable device may pause or shut down the current application and start a new application. For example, a game may be paused while the user answers a phone call. When the user finishes the call, he can return to the game and resume where he left off. If the portable device is running several applications simultaneously, then selecting the alert window may just cause the screen to display a different application.

If the alert is associated with a particular application of the portable device, then the alert may be selected by pressing a predefined key on a keypad. For example, mobile phones usually have one key which can be pressed to answer a call and a further key to reject a call. Therefore, if the user receives an incoming call whilst using a different application, it is convenient if the alert can be selected and thus the call answered by pressing the predefined key that answers the call. This concept could be extended so that each application of the portable device with which an alert can be associated has a designated key. More conveniently, one key on a portable device's keypad could be designated for selecting any alert. The action taken by the portable device if that key is pressed when an alert is triggered will depend on the nature of the alert so e.g. if an incoming call is received pressing the designated key will answer the call whereas if an incoming text message is received pressing the key will close or pause the current application and cause the texting application to be opened and displayed on the screen.

A number of arrangements are available for selection of the alert. In one arrangement there is a dedicated key for selection of the alert. This key can be used for selection of any type of alert. In another arrangement there are two or more dedicated keys for selection of alerts, each key being usable for selection of a respective type of alert. For example, there could be a dedicated key for selection of alerts relating to incoming telephone calls, a dedicated key for selection of alerts relating to incoming text messages and so on. Other types of alert for which there could be a dedicated key include text (SMS) messaging, instant messaging, music playing, proximity specific interactions like payment (either remote or non-remote), identity, social group awareness, service availability, recording video, and taking photos. It will be appreciated that the dedicated keys are not necessarily usable for their dedicated function 100% of the time: in some (preferably rare) situations they could serve other purposes. However, to maintain the integrity of the user interface they should be sufficiently dedicated to be conceptually perceived by a user as having the specific function as described above.

The or each such dedicated key is preferably not an alphanumeric key of the device, since such keys are often desirably used for normal tasks of a function that might inhibit their use for selection of an alert. The or each such dedicated key is preferably physically distinct from other keys of the device especially any alphanumeric keys, for example by being mounted in a prominent position and/or physically isolated from the other keys. This makes it easier for a user to recognise the key as having a special function.

The or each such key may be marked (on the key or on the body of the device adjacent to the key) with an icon that matches one shown on the alert. Thus, if the key is operable for selection of all types of alert it may be marked with a generic alert icon that also appears on the alerts. If the key is operable for selection of a specific type of alert it may be marked with an icon (e.g. an envelope) that also appears on alerts of that type.

When the alert is selected a function related to the alert is activated. When the alert relates to an incoming communication that function would normally allow the user to receive that communication, for example by speaking to a telephone caller or viewing an incoming message.

Selecting an alert window may not affect the current application. For example, if the portable device is currently functioning as an MP3 player, the device may continue to play music while the user replies to a text message.

Selecting an alert window may also cause additional information to be displayed while the current application continues unaffected. For example, the alert window may contain a simple icon e.g. to inform the user that a text message has been received. If the user selects the icon, then a pop-up window such as an SNB is displayed containing the text message.

The action that is taken by the portable device if an alert window is selected will be defined by the nature of the event or situation that triggered the alert and the application(s) that is running on the portable device at the time. For example, an audio application may continue to play if the selected alert involves relates to replying to a text message. However, if the selected alert relates to answering an incoming call, it would be undesirable for the audio application to continue play while the user has a conversation.

Some alert windows may not be selectable because there is no defined response to the selection, for instance if the alert was just intended to supply the user with information, such as an upcoming doctor's appointment.

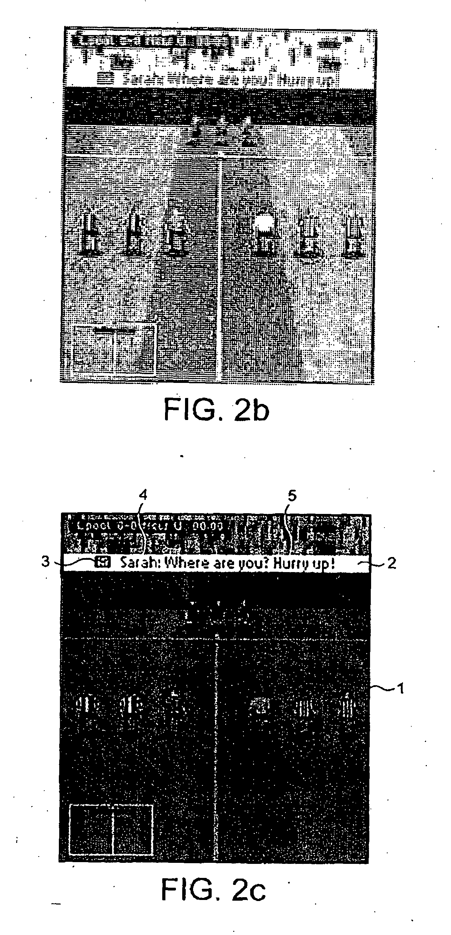

An alert window such as an SNB can provide the user with more information than just the type of the alert and the identity, if any, of a caller. For example, in figure 2 the portable device receives an incoming text message. In figure 2a, the screen (1) of the portable device displays the game which the user is playing. In figure 2b, the portable device receives a text message and displays an SNB (2) on an appropriate part of the screen. The SNB provides concise information about the type of alert using an icon (3) to denote a text message. The SNB also provides information about the person (or phone) from which the text message has been received (4). In addition, the SNB displays the actual content of the text message (5). Thus, rather than having to exit the current application to read the text message, the user is able to read the message while continuing with the current application, in this case a game.

In figure 2, the received text message is short and can be seen, together with the identity of the sender, in its entirety on the screen of the portable device. However, as explained above, longer text messages can be displayed by scrolling the message across the screen.

If after having scanned the text message in figure 2, the user decides he should reply he can do so by selecting the SNB (2), as described above. This can be done by e.g. pressing a particular button or touching the SNB if the portable device has a touch sensitive screen. This pauses the game and opens the messaging application. The user can then type his reply e.g. "5 mins", press send and return to the game in its paused state. By default, the message is sent to the device from which the original message was received.

In addition to displaying information for the user about obvious trigger events such as incoming calls and text messages, the portable device may provide the user with information about other situations e.g. status information of the device that might affect the operation of the current application such as battery level or signal strength has reached a threshold value.

Figure 2c illustrates such an alert. In figure 2c it can be seen that the portable device has adjusted the brightness of the display so that it appears darker. This type of alert might suitably be used to inform the user of a situation that might affect the application they are currently using, e.g. low battery or signal strength. Typically, the alert would be triggered when a condition monitored by the portable device reaches a predefined threshold. So in figure 2c, the portable device has determined that either the battery strength has dropped below some threshold value, or the signal strength required to play the game has dropped below a certain threshold and will affect the playing experience.

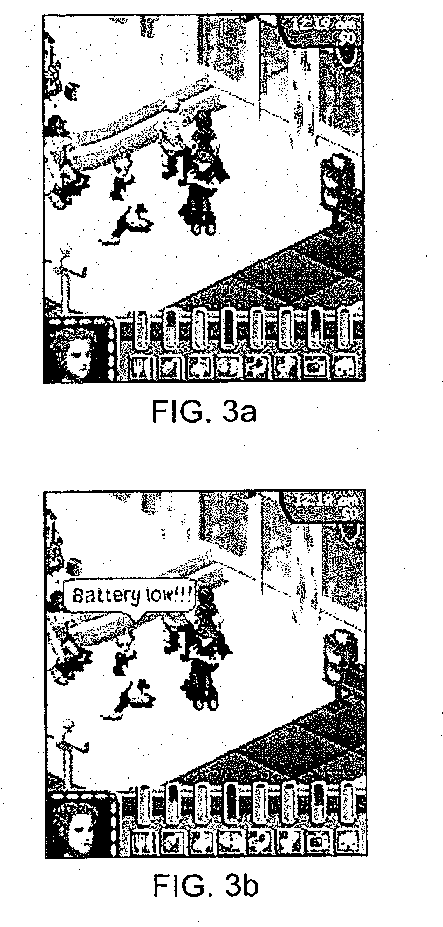

As an alternative to having a predefined area of the screen for displaying an alert window for each application, the location of the alert window can be determined by the information being displayed on the screen at the time the alert is triggered. For instance, the alert window may be directly integrated into the application environment. So for example, if the current application is a game, the alert may be "spoken" by one of the characters in the game. An example is illustrated in figure 3b. The portable device has detected that the battery charge is running low and alerts the user to this situation by displaying an SNB (6) that is "spoken" by one of the game's characters. This is particularly advantageous in applications such as gaming that tend to engross the user's attention. By integrating the alert into the application, the user is far more likely to notice it. It also minimises the user's distraction from the current application.

Although the alert in figure 3b is displayed by an SNB, any other suitable type of window might be used. In particular where the entire alert information can be contained within the window, such as illustrated in figure 3b, it is not necessary for the information to be scrolled across the screen.

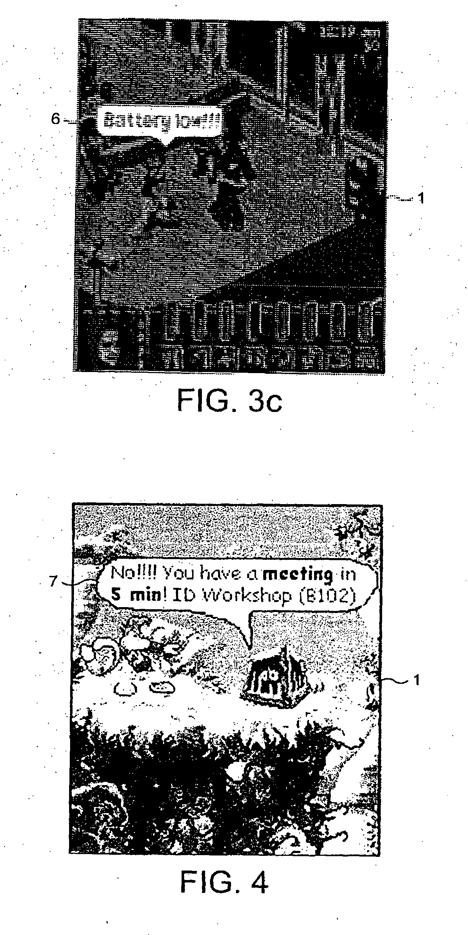

In a further embodiment, the alert may be integrated even further into the application environment so that the way in which the alert information is provided to the user is dependent on the current application and the information being displayed. For example, the alert may be integrated into the actual game play of a gaming application. This can be achieved by having the game's characters "act out" the event that triggered the alert e.g. by answering a mobile phone. The alert can also be seamlessly integrated into the game environment by generating alert information that actually depends on the application information being displayed on the screen at the time the alert is triggered. In figure 4, a diary reminder has been triggered in the portable device. The portable device displays the alert as an SNB (7), which contains information generated in dependence on the current situation in the game's environment in addition to information about the nature of the alert itself. In this example, one of the game's characters not only "speaks" the alert, but also tries to take advantage of it in the game play to save his life.

For gaming applications, the alert could also be provided by a change in viewpoint or camera angle, such that the alert is displayed through an animated change in viewpoint angle bringing the (normally off-screen) area containing the alert information becomes visible.

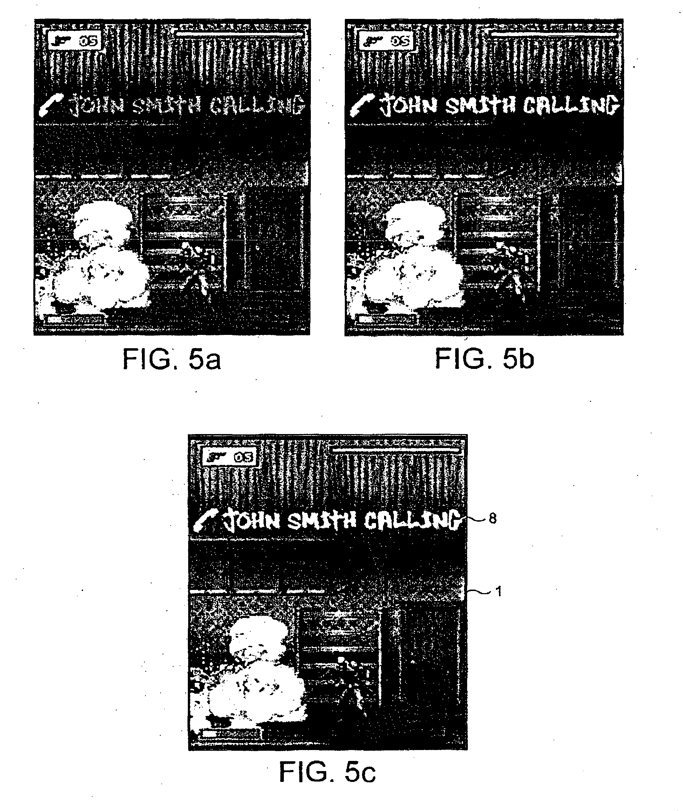

The different types of alert may be combined, so that an alert window becomes more noticeable as time passes and the importance or relevance of the event that triggered the alert increases. For example, in figure 3b the portable device displays a low battery alert as an SNB (6) "spoken" by one of the characters. As the user continues to play the game, the portable device reinforces the alert by adjusting the brightness of the display so that the displayed image becomes darker as in figure 3c. A further example is shown in figure 5, where the text of the SNB (8) becomes steadily brighter as time passes and the user does not answer the incoming telephone call.

Figures 5a-c show the SNB (8) at 10 second intervals. The time period for which the SNB is displayed and the interval over which a parameter of the alert is altered can be set to a default setting by the application designer and may be adjusted by the user.

In addition to adjusting parameters such as brightness or contrast, many other characteristics can be altered as the event or situation that triggered the alert becomes more relevant. Suitable characteristics include the opacity of the alert window, the window becoming more opaque as the importance or priority of the object increases, font or graphic size and level of detail, colour etc. These characteristics are examples only and any suitable characteristics of the alert might be varied. Scalable vector graphics (SVG) may be used to implement the changes.

By default, the system for notifying the user of events which has been described herein would normally be switched off. The user can enable the notification system for any (or all) of the applications provided by the portable device. The user can also define characteristics of the notification system. Examples of such characteristics include: screen coordinates and shape of an alert window, opacity of an alert window, text direction and scrolling speed, background colour and texture, font style and size and border style. The initial settings of these characteristics will be set by the application designer. This is advantageous because each designer will naturally select the characteristics that will minimise interference with that particular application.

An SNB is normally implemented by the operating system of the portable device. The operation of the SNB may be based on tracking events in the event queue, for example.

Other interactive techniques, such as recognition of gestures using 2D/3D acceleration sensors could be integrated with the notification system.

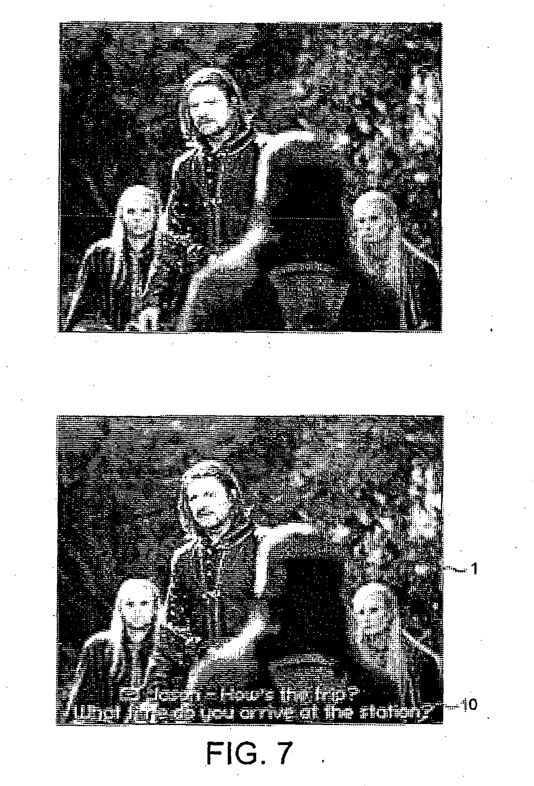

The above examples have mainly described the notification method with respect to gaming applications. However, this is for the purposes of example only and the present invention is applicable to any application that may be provided by a portable device. For example, figures 6 and 7 illustrate alert windows (9 and 10) being displayed after text messages are received as the portable device is functioning as an MP3 player and a video player respectively.

The present invention is applicable to any applications that may be offered by portable devices and by any triggers that may cause an alert to be issued by a portable device (either now or in the future). In particular, the invention is not limited to the particular types of applications and alerts described herein. For example, the present invention is applicable to any of the following: music and video playing, proximity specific interactions (e.g. payment, identity, social group awareness, service availability), payment, recording video, taking photographs etc.

The notification method of the present invention can allows good use to be made of the display in portable devices, which often have small screens. It provides a user with peripheral awareness about objects or events of interest in an unobtrusive fashion. It also enables a user to be more effective in multi-tasking, providing the user with information about what triggered the alert, so that the user can decide whether to move from the current application to another application based on well defined contextual information.

The applicant hereby discloses in isolation each individual feature described herein and any combination of two or more such features, to the extent that such features or combinations are capable of being carried out based on the present specification as a whole in light of the common general knowledge of a person skilled in the art, irrespective of whether such features or combinations of features solve any problems disclosed herein, and without limitation to the scope of the claims. The applicant indicates that aspects of the present invention may consist of any such feature or combination of features. In view of the foregoing description it will be evident to a person skilled in the art that various modifications may be made within the scope of the invention.

## Claims

1. A portable device for notifying a user of an event, the device being capable of providing a user-operable function to the user and having a screen for displaying function information in accordance with the user-operable function being operated by the user and a keypad comprising a plurality of keys for receiving input from the user, wherein the device is arranged to:
determine that an event independent of the user-operable function has occurred;
generate event information about the event;
display at least some of the event information on the screen;
in response to a single one of the keys being operated whilst at least some of the event information is displayed, activate a second function corresponding to the event; the portable device **characterised in that**
an action taken by the portable device when said second function is activated is defined by the type of said event and said user-operable function; and
the event is one of a plurality of different types of event and the device is capable of providing a plurality of different second functions corresponding to the types of event and the device is arranged to activate one of those functions as the second function in dependence on the type of the event.

2. A portable device as claimed in claim 1, wherein the types of event include different forms of incoming communication to the device.

3. A portable device as claimed in claim 2, wherein said functions include a wireless communication function.

4. A portable device as claimed in any of claims 1 to 3, wherein the device is arranged to, if the incoming communication is an incoming text or multimedia message, activate a text or multimedia communication function as the second function.

5. A portable device as claimed in any of claims 1 to 3, wherein the device is arranged to, if the incoming communication is telephone call, activate a telephone call function as the second function.

6. A portable device as claimed in claim 5, wherein the device is arranged so that operating the single one of the keys whilst at least some of the event information is displayed causes the incoming call to be accepted.

7. A portable device as claimed in claim 5, wherein the device is arranged so that operating the single one of the keys whilst at least some of the event information is displayed causes the incoming call to be rejected.

8. A portable device as claimed in claim 1 or 2, wherein the types of event include one or more types of occurrence within the portable device.

9. A portable device as claimed in claim 8, wherein the device is arranged so as to provide a diary function to the user and one of the said types of occurrence is the triggering of a diary reminder.

10. A portable device as claimed in claim 8, wherein the device comprises a battery and one of the said types of occurrence is the battery level falling below a predetermined threshold.

11. A portable device as claimed in any preceding claim, wherein the single one of the keys is a dedicated key, such that the second function is only activated in response to the dedicated key being operated whilst at least some of the event information is displayed.

12. A portable device as claimed in claim 11, wherein the device has a single dedicated key that activates the second function irrespective of the type of event that occurred.

13. A portable device as claimed in claim 11, wherein the device has a different dedicated key to activate the second function for each type of event.

14. A portable device as claimed in any preceding claim, wherein the device is arranged to pause the user-operable function when the second function is activated.

15. A portable device as claimed in any preceding claim, wherein the device is arranged to provide the user with the user-operable function and the second function simultaneously.

16. A portable device as claimed in any preceding claim, wherein activation of the second function causes additional information about the event to be displayed.

17. A method for notifying a user of an event, the method being carried out by a device capable of providing a user-operable function to the user and having a screen for displaying function information in accordance with the user operable function being operated by the user and a keypad comprising a plurality of keys for receiving input from the user, the method comprising :
determining that an event independent of the first function has occurred;
generating event information about the event;
displaying at least some of the event information on the screen;
in response to a single one of the keys being operated whilst at least some of the event information is displayed, activating a second function corresponding to the event; the method **characterised by**
defining an action taken by the portable device when said second function is activated by the type of said event and said user operable function; wherein the event may be one of a plurality of different types of event and the device is capable of providing a plurality of different second functions corresponding to the types of event and the device is arranged to activate one of those functions as the second function in dependence on the type of the event.

18. A method as claimed in claim 17, wherein the types of event include different forms of incoming communication to the device.

19. A method as claimed in claim 18, wherein said functions include a wireless communication function.

20. A method as in any of claims 17 to 19 further comprising activating a text or multimedia communication function as the second function if the incoming communication is an incoming text or multimedia message.

21. A method as claimed in any of claims 17 to 19, further comprising activating a telephone call function as the second function if the incoming communication is telephone call.

22. A method as claimed in claim 21, further comprising accepting the incoming call when the single one of the keys is operated whilst at least some of the event information is displayed.

23. A method as claimed in claim 21, further comprising rejection the incoming call when the single one of the keys is operated whilst at least some of the event information is displayed.

24. A method as claimed in claim 17 or 18, wherein the types of event include one or more types of occurrence within the portable device.

25. A method as claimed in claim 24, further comprising providing a diary function to the user wherein one of the said types of occurrence is the triggering of a diary reminder.

26. A method as claimed in claim 24, wherein the device comprises a battery and one of the said types of occurrence is the battery level falling below a predetermined threshold.

27. A method as claimed in any of claims 17 to 26, wherein the single one of the keys is a dedicated key, such that the second function is only activated in response to the dedicated key being operated whilst at least some of the event information is displayed.

28. A method as claimed in claim 27, wherein the device has a single dedicated key that activates the second function irrespective of the type of event that occurred.

29. A method as claimed in claim 27, wherein the device has a different dedicated key to activate the second function for each type of event.

30. A method as claimed in any of claims 17 to 29, further comprising pausing the user-operable function being operated by the user when the second function is activated.

31. A method as claimed in any of claims 17 to 30, further comprising providing the user with the user-operable function and the second function simultaneously.

32. A method as claimed in any of claims 17 to 31, further comprising displaying additional information about the event when the second function is activated.

## Patentansprüche

1. Tragbare Vorrichtung zum Benachrichtigen eines Benutzers über ein Ereignis, wobei die Vorrichtung in der Lage ist, dem Benutzer eine benutzerbedienbare Funktion bereitzustellen, und einen Bildschirm zum Anzeigen von Funktionsinformationen gemäß der vom Benutzer bedienten benutzerbedienbaren Funktion und ein Tastenfeld mit mehreren Tasten zum Empfangen von Eingaben vom Benutzer aufweist, wobei die Vorrichtung für Folgendes ausgelegt ist:
Bestimmen, dass ein von der benutzerbedienbaren Funktion unabhängiges Ereignis stattgefunden hat;
Erzeugen von Ereignisinformationen über das Ereignis;
Anzeigen mindestens eines Teils der Ereignisinformationen auf dem Bildschirm;
Aktivieren einer dem Ereignis entsprechenden zweiten Funktion als Reaktion auf die Betätigung einer einzelnen der Tasten, während mindestens ein Teil der Ereignisinformationen angezeigt wird; wobei die tragbare Vorrichtung **dadurch gekennzeichnet** ist, dass
eine durch die tragbare Vorrichtung unternommene Aktion, wenn die zweite Funktion aktiviert wird, durch die Art des Ereignisses und die benutzerbedienbare Funktion definiert wird; und das Ereignis eine von mehreren verschiedenen Arten von Ereignis ist und die Vorrichtung in der Lage ist, mehrere verschiedene zweite Funktionen bereitzustellen, die den Arten von Ereignis entsprechen, und die Vorrichtung dafür ausgelegt ist, in Abhängigkeit von der Art des Ereignisses eine dieser Funktionen als die zweite Funktion zu aktivieren.

2. Tragbare Vorrichtung nach Anspruch 1, wobei die Arten von Ereignis verschiedene Formen ankommender Kommunikation an der Vorrichtung umfassen.

3. Tragbare Vorrichtung nach Anspruch 2, wobei die Funktionen eine drahtlose Kommunikationsfunktion umfassen.

4. Tragbare Vorrichtung nach einem der Ansprüche 1 bis 3, wobei die Vorrichtung, wenn die ankommende Kommunikation eine ankommende Text- oder Multimedia-nachricht ist, dafür ausgelegt ist, eine Text- oder Multimediakommunikationsfunktion als die zweite Funktion zu aktivieren.

5. Tragbare Vorrichtung nach einem Ansprüche 1 bis 3, wobei die Vorrichtung, wenn die ankommende Kommunikation ein Telefonanruf ist, dafür ausgelegt ist, eine Telefonanruffunktion als die zweite Funktion zu aktivieren.

6. Tragbare Vorrichtung nach Anspruch 5, wobei die Vorrichtung so ausgelegt ist, dass Betätigung der einzelnen der Tasten, während mindestens ein Teil der Ereignisinformationen angezeigt wird, die Annahme des ankommenden Anrufs bewirkt.

7. Tragbare Vorrichtung nach Anspruch 5, wobei die Vorrichtung so ausgelegt ist, dass Betätigung der einzelnen der Tasten, während mindestens ein Teil der Ereignisinformationen angezeigt wird, die Zurückweisung des ankommenden Anrufs bewirkt.

8. Tragbare Vorrichtung nach Anspruch 1 oder 2, wobei die Arten von Ereignis eine oder mehrere Arten des Auftretens in der tragbaren Vorrichtung umfassen.

9. Tragbare Vorrichtung nach Anspruch 8, wobei die Vorrichtung so ausgelegt ist, dass dem Benutzer eine Terminkalenderfunktion bereitgestellt wird, und eine der Arten von Auftreten das Triggern einer Terminkalender-Erinnerung ist.

10. Tragbare Vorrichtung nach Anspruch 8, wobei die Vorrichtung eine Batterie umfasst und eine der Arten des Auftretens das Fallen des Batteriestands unter eine vorbestimmte Schwelle ist.

11. Tragbare Vorrichtung nach einem der vorhergehenden Ansprüche, wobei die einzelne der Tasten eine dedizierte Taste ist, so dass die zweite Funktion nur aktiviert wird, wenn die dedizierte Taste betätigt wird, während mindestens ein Teil der Ereignisinformationen angezeigt wird.

12. Tragbare Vorrichtung nach Anspruch 11, wobei die Vorrichtung eine einzelne dedizierte Taste aufweist, die die zweite Funktion ungeachtet der Art von Ereignis, das aufgetreten ist, aktiviert.

13. Tragbare Vorrichtung nach Anspruch 11, wobei die Vorrichtung für jede Art von Ereignis eine andere dedizierte Taste zur Aktivierung der zweiten Funktion aufweist.

14. Tragbare Vorrichtung nach einem der vorhergehenden Ansprüche, wobei die Vorrichtung dafür ausgelegt ist, die benutzerbedienbare Funktion anzuhalten, wenn die zweite Funktion aktiviert wird.

15. Tragbare Vorrichtung nach einem der vorhergehenden Ansprüche, wobei die Vorrichtung dafür ausgelegt ist, dem Benutzer die benutzerbedienbare Funktion und die zweite Funktion gleichzeitig bereitzustellen.

16. Tragbare Vorrichtung nach einem der vorhergehenden Ansprüche, wobei Aktivierung der zweiten Funktion die Anzeige von zusätzlichen Informationen über das Ereignis bewirkt.

17. Verfahren zum Benachrichtigen eines Benutzers über ein Ereignis, wobei das Verfahren durch eine Vorrichtung ausgeführt wird, die in der Lage ist, dem Benutzer eine benutzerbedienbare Funktion bereitzustellen, und einen Bildschirm zum Anzeigen von Funktionsinformationen gemäß der vom Benutzer bedienten benutzerbedienbaren Funktion und ein Tastenfeld mit mehreren Tasten zum Empfangen von Eingaben vom Benutzer aufweist, wobei das Verfahren Folgendes umfasst:
Bestimmen, dass ein von der ersten Funktion unabhängiges Ereignis stattgefunden hat;
Erzeugen von Ereignisinformationen über das Ereignis;
Anzeigen mindestens eines Teils der Ereignisinformationen auf dem Bildschirm;
Aktivieren einer dem Ereignis entsprechenden zweiten Funktion als Reaktion auf die Betätigung einer einzelnen der Tasten, während mindestens ein Teil der Ereignisinformationen angezeigt wird; wobei das Verfahren durch Folgendes gekennzeichnet ist:
Definieren einer durch die tragbare Vorrichtung unternommenen Aktion, wenn die zweite Funktion aktiviert wird, durch die Art des Ereignisses und die benutzerbedienbare Funktion; wobei das Ereignis eines von mehreren verschiedenen Arten von Ereignis sein kann und die Vorrichtung in der Lage ist, mehrere verschiedene zweite Funktionen bereitzustellen, die den Arten von Ereignis entsprechen, und die Vorrichtung dafür ausgelegt ist, in Abhängigkeit von der Art des Ereignisses eine dieser Funktionen als die zweite Funktion zu aktivieren.

18. Verfahren nach Anspruch 17, wobei die Arten von Ereignis verschiedene Formen ankommender Kommunikation an der Vorrichtung umfassen.

19. Verfahren nach Anspruch 18, wobei die Funktionen eine drahtlose Kommunikationsfunktion umfassen.

20. Verfahren nach einem der Ansprüche 17 bis 19, ferner umfassend Aktivieren einer Text- oder Multimediakommunikationsfunktion als die zweite Funktion, wenn die ankommende Kommunikation eine ankommende Text- oder Multimedianachricht ist.

21. Verfahren nach einem der Ansprüche 17 bis 19, ferner umfassend Aktivieren einer Telefonanruffunktion als die zweite Funktion, wenn die ankommende Kommunikation ein Telefonanruf ist.

22. Verfahren nach Anspruch 21, ferner umfassend Annehmen des ankommenden Anrufs, wenn die einzelne der Tasten betätigt wird, während mindestens ein Teil der Ereignisinformationen angezeigt wird.

23. Verfahren nach Anspruch 21, ferner umfassend Zurückweisen des ankommenden Anrufs, wenn die einzelne der Tasten betätigt wird, während mindestens ein Teil der Ereignisinformationen angezeigt wird.

24. Verfahren nach Anspruch 17 oder 18, wobei die Arten von Ereignis eine oder mehrere Arten des Auftretens in der tragbaren Vorrichtung umfassen.

25. Verfahren nach Anspruch 24, ferner umfassend Bereitstellen einer Terminkalenderfunktion für den Benutzer, wobei eine der Arten von Auftreten das Triggern einer Terminkalendererinnerung ist.

26. Verfahren nach Anspruch 24, wobei die Vorrichtung eine Batterie umfasst und eine der Arten des Auftretens das Fallen des Batteriestands unter eine vorbestimmte Schwelle ist.

27. Verfahren nach einem der Ansprüche 17 bis 26, wobei die einzelne der Tasten eine dedizierte Taste ist, so dass die zweite Funktion nur aktiviert wird, wenn die dedizierte Taste betätigt wird, während mindestens ein Teil der Ereignisinformationen angezeigt wird.

28. Verfahren nach Anspruch 27, wobei die Vorrichtung eine einzelne dedizierte Taste aufweist, die die zweite Funktion ungeachtet der Art von Ereignis, die aufgetreten ist, aktiviert.

29. Verfahren nach Anspruch 27, wobei die Vorrichtung für jede Art von Ereignis eine andere dedizierte Taste zur Aktivierung der zweiten Funktion aufweist.

30. Verfahren nach einem der Ansprüche 17 bis 29, ferner umfassend Anhalten der benutzerbedienbaren Funktion, die vom Benutzer bedient wird, wenn die zweite Funktion aktiviert wird.

31. Verfahren nach einem der Ansprüche 17 bis 30, das ferner umfasst, dem Benutzer die benutzerbedienbare Funktion und die zweite Funktion gleichzeitig bereitzustellen.

32. Verfahren nach einem der Ansprüche 17 bis 31, ferner umfassend Anzeigen zusätzlicher Informationen über das Ereignis, wenn die zweite Funktion aktiviert wird.

## Revendications

1. Dispositif portable pour notifier à un utilisateur d'un événement, le dispositif étant capable de fournir une fonction exécutable par l'utilisateur à l'utilisateur et disposant d'un écran pour afficher des informations de fonction conformément à la fonction exécutable par l'utilisateur exécutée par l'utilisateur et un clavier comprenant une pluralité de touches pour recevoir une entrée de l'utilisateur, où le dispositif est conçu pour :
déterminer qu'un événement indépendant de la fonction exécutable par l'utilisateur est survenu ;
générer des informations d'événement concernant l'événement ;
afficher au moins certaines des informations d'événement sur l'écran ;
en réponse à une seule des touches actionnées tandis qu'au moins certaines des informations d'événement sont affichées, activer une seconde fonction correspondant à l'événement ; le dispositif portable étant **caractérisé en ce que** :
une action entreprise par le dispositif portable lorsque ladite seconde fonction est activée est définie par le type dudit événement et ladite fonction exécutable par l'utilisateur ; et
l'événement est un parmi une pluralité de différentes types d'événements et le dispositif est capable de fournir une pluralité de secondes fonctions différentes correspondant aux types d'événement et le dispositif est conçu pour activer une des ces fonctions comme seconde fonction en fonction du type de l'événement.

2. Dispositif portable tel que revendiqué dans la revendication 1, dans lequel les types d'événement comprennent différentes formes de communications entrant dans le dispositif.

3. Dispositif portable tel que revendiqué dans la revendication 2, dans lequel lesdites fonctions comprennent une fonction de communication sans fil.

4. Dispositif portable tel que revendiqué dans l'une quelconque des revendications 1 à 3, dans lequel le dispositif est conçu pour, si la communication entrante est un texte ou un message multimédia entrants, activer une fonction de communication de texte ou multimédia comme seconde fonction.

5. Dispositif portable tel que revendiqué dans l'une quelconque des revendications 1 à 3, dans lequel le dispositif est conçu pour, si la communication entrante est un appel téléphonique, activer une fonction d'appel téléphonique comme seconde fonction.

6. Dispositif portable tel que revendiqué dans la revendication 5, dans lequel le dispositif est conçu de manière à ce que l'actionnement d'une seule des touches tandis qu'au moins certaines des informations d'événement sont affichées, amène l'appel entrant à être accepté.

7. Dispositif portable tel que revendiqué dans la revendication 5, dans lequel le dispositif est conçu de manière à ce que l'actionnement d'une seule des touches tandis qu'au moins certaines des informations d'événement sont affichées, amène l'appel entrant à être rejeté.

8. Dispositif portable tel que revendiqué dans la revendication 1 ou 2, dans lequel les types d'événement comprennent un ou plusieurs types d'occurrences dans le dispositif portable.

9. Dispositif portable tel que revendiqué dans la revendication 8, dans lequel le dispositif est conçu afin de fournir une fonction d'agenda à l'utilisateur et un desdits types d'occurrence est le déclencheur de rappel d'agenda.

10. Dispositif portable tel que revendiqué dans la revendication 8, dans lequel le dispositif comprend une batterie et un desdits types d'occurrence représente le niveau de batterie tombant sous un seuil prédéterminé.

11. Dispositif portable tel que revendiqué dans l'une quelconque des revendications précédentes, dans lequel la seule des touches est une touche dédiée, de manière à ce que la seconde fonction soit activée seulement en réponse à l'actionnement de la touche dédiée tandis qu'au moins certaines des informations d'événement sont affichées.

12. Dispositif portable tel que revendiqué dans la revendication 11, dans lequel le dispositif dispose d'une seule touche dédiée qui active la seconde fonction indifféremment du type d'événement qui survient.

13. Dispositif portable tel que revendiqué dans la revendication 11, dans lequel le dispositif dispose d'une touche dédiée différente pour activer la seconde fonction pour chaque type d'événement.

14. Dispositif portable tel que revendiqué dans l'une quelconque des revendications précédentes, dans lequel le dispositif est conçu pour suspendre la fonction exécutable par l'utilisateur lorsque la seconde fonction est activée.

15. Dispositif portable tel que revendiqué dans l'une quelconque des revendications précédentes, dans lequel le dispositif est conçu pour fournir à l'utilisateur la fonction exécutable par l'utilisateur et la seconde fonction simultanément.

16. Dispositif portable tel que revendiqué dans l'une quelconque des revendications précédentes, dans lequel l'activation de la seconde fonction amène des informations additionnelles concernant l'événement à être affichées.

17. Procédé pour notifier à un utilisateur un événement, le procédé étant réalisé par un dispositif capable de fournir une fonction exécutable par l'utilisateur à l'utilisateur et disposant d'un écran pour afficher des informations de fonction conformément à la fonction exécutable par l'utilisateur exécutée par l'utilisateur et un clavier comprenant une pluralité de touches pour recevoir une entrée de l'utilisateur, où le procédé comprend les étapes suivantes :
déterminer qu'un événement indépendant de la première fonction est survenu ;
générer des informations d'événement concernant l'événement ;
afficher au moins certaines des informations d'événement sur l'écran ;
en réponse à une seule des touches actionnées tandis qu'au moins certaines des informations d'événement sont affichées, activer une seconde fonction correspondant à l'événement ; le procédé étant **caractérisé par** l'étape suivante :
définir une action entreprise par le dispositif portable lorsque ladite seconde fonction est activée par le type dudit événement et ladite fonction exécutable par l'utilisateur ;
où l'événement peut être un parmi une pluralité de différents types d'événements et le dispositif est capable de fournir une pluralité de secondes fonctions différentes correspondant aux types d'événement et le dispositif est conçu pour activer une des ces fonctions comme seconde fonction en fonction du type de l'événement.

18. Procédé tel que revendiqué dans la revendication 17, dans lequel les types d'événement comprennent différentes formes de communications entrant dans le dispositif.

19. Procédé tel que revendiqué dans la revendication 18, dans lequel lesdites fonctions comprennent une fonction de communication sans fil.

20. Procédé tel que revendiqué dans l'une quelconque des revendications 17 à 19, comprenant d'activer une fonction de communication multimédia ou de texte comme seconde fonction si la communication entrante est un message multimédia ou un texte entrants.

21. Procédé tel que revendiqué dans l'une quelconque des revendications 17 à 19, comprenant en outre d'activer une fonction d'appel téléphonique comme seconde fonction si la communication entrante est un appel téléphonique.

22. Procédé tel que revendiqué dans la revendication 21, comprenant en outre d'accepter l'appel entrant lorsqu'une seule des touches est actionnée tandis qu'au moins certaines des informations d'événement sont affichées.

23. Procédé tel que revendiqué dans la revendication 21, comprenant en outre de rejeter l'appel entrant lorsqu'une seule des touches est actionnée tandis qu'au moins certaines des informations d'événement sont affichées.

24. Procédé tel que revendiqué dans la revendication 17 ou la revendication 18, dans lequel les types d'événement comprennent un ou plusieurs types d'occurrences dans le dispositif portable.

25. Procédé tel que revendiqué dans la revendication 24, comprenant en outre de fournir une fonction d'agenda à l'utilisateur où un desdits types d'occurrence est le déclencheur d'un rappel d'agenda.

26. Procédé tel que revendiqué dans la revendication 24, dans lequel le dispositif comprend une batterie et un desdits types d'occurrence représente le niveau de batterie tombant sous un seuil prédéterminé.

27. Procédé tel que revendiqué dans l'une quelconque des revendications 17 à 26, dans lequel la seule des touches est une touche dédiée, de manière à ce que la seconde fonction soit activée seulement en réponse à l'actionnement de la touche dédiée tandis qu'au moins certaines des informations d'événement sont affichées.

28. Procédé tel que revendiqué dans la revendication 27, dans lequel le dispositif dispose d'une touche dédiée unique qui active la seconde fonction indifféremment du type d'événement qui survient.

29. Procédé tel que revendiqué dans la revendication 27, dans lequel le dispositif dispose d'une touche dédiée différente pour activer la seconde fonction pour chaque type d'événement.

30. Procédé tel que revendiqué dans l'une quelconque des revendications 17 à 29, comprenant en outre de suspendre la fonction exécutable par l'utilisateur lorsque la seconde fonction est activée.

31. Procédé tel que revendiqué dans l'une quelconque des revendications 17 à 29, comprenant en outre de fournir à l'utilisateur la fonction exécutable par l'utilisateur et la seconde fonction simultanément.

32. Procédé tel que revendiqué dans l'une quelconque des revendications 17 à 31, comprenant en outre d'afficher des informations additionnelles concernant l'événement lorsque la seconde fonction est activée.
